# EUROPÄISCHE PATENTSCHRIFT

(11) **EP 2 726 762 B1**
(45) Veröffentlichungstag und Bekanntmachung des Hinweises auf die Patenterteilung: **04.10.2017**
(21) Anmeldenummer: 12727345.6
(22) Anmeldetag: 04.06.2012
(51) Int. Cl.: F16H 61/28

(54) **SCHALTAKTUATOR ZUM AUSLENKEN EINER SCHALTWELLE EINES GETRIEBES**
SHIFT ACTUATOR FOR DEFLECTING A SELECTOR SHAFT OF A TRANSMISSION
ACTIONNEUR DE COMMANDE POUR DÉPLACER UN ARBRE DE PASSAGE DE VITESSE DE BOÎTE DE VITESSES

(30) Priorität: 29.06.2011 DE 102011078360
(43) Veröffentlichungstag der Anmeldung: 07.05.2014
(73) Patentinhaber: Robert Bosch GmbH, 70442 Stuttgart (DE)
(72) Erfinder: STUBNER, Armin, 77815 Buehl-Altschweier (DE); MAIER, Wolfgang, 71732 Tamm (DE); MARTIN, Norbert, 77855 Achern (DE); FEES, Heiner, 74321 Bietigheim-Bissingen (DE)
(86) Internationale Anmeldenummer: PCT/EP2012/060460
(87) Internationale Veröffentlichungsnummer: WO 2013/000664

(56) Entgegenhaltungen:
- EP-A1- 1 571 378
- DE-A1- 10 160 026
- DE-A1- 19 758 713
- US-A1- 2007 251 345

## Beschreibung

### Technisches Gebiet

Die Erfindung betrifft einen Schaltaktuator, insbesondere einen Schaltaktuator zum Auslenken einer Schaltwelle eines Getriebes; eine Schaltwelle, insbesondere eine Schaltwelle zum Schieben eines auf die Schaltwelle aufsetzbaren Getriebezahnrades und einen Getriebestellaktuator mit dem Schaltaktuator und der Schaltwelle.

### Stand der Technik

Zum Schalten eines mehrstufigen Getriebes ist ein Schaltaktuator notwendig, der die Getriebezahnräder bewegt und miteinander in Eingriff bringt.

Ein bekannter Schaltaktuator ist eine Schaltwalze. Dabei handelt es sich um einen Rundzylinder, auf dessen Mantelfläche Kanäle eingefräst sind. In jeden Kanal greift ein Führungsdorn einer Schaltgabel ein, die ein Getriebezahnrad hält. Der Verlauf der Kanäle ist derart gelegt, dass in einer bestimmten Stellung der Schaltwalze höchstens zwei Getriebezahnräder miteinander in Eingriff gebracht sind. Der Rundzylinder ist um seine Rotationsachse drehbar gelagert, so dass das Getriebe durch drehen der Schaltwalze geschaltet werden kann.

Ein Nachteil der Schaltwalze ist sein hoher Platzbedarf.

Ein weiterer bekannter Schaltaktuator wird durch einen Linearantrieb, wie beispielsweise einen Spindelantrieb betätigt. Hierbei handelt es sich um eine Schaltwelle, auf der die Getriebezahnräder aufgesetzt sind. Der Linearantrieb schiebt oder zieht die Schaltwelle, so dass eines der Getriebezahnräder auf der Schaltwelle mit Zahnrädern auf der Getriebeeingangswelle und auf der Getriebeausgangswelle in Eingriff gebracht wird, um ein bestimmtes Übersetzungsverhältnis herzustellen.

Ein Nachteil des Linearantriebs ist, dass er eingelegte Getriebegänge teils nicht sicher halten kann.

Aus der EP 1 571 378 A1 ist eine Schaltbetätigung für ein automatisiertes Getriebe bekannt.

Aus der DE 101 60 026 A1 ist ein Betätigungsmechanismus zur Axialverstellung mit doppelter Funktion bekannt.

Aus der US 2007/0251345 A1 ist ein Zweiganggetriebe mit einer adaptiven Drehmomentübertragungskupplung bekannt.

Aus der DE 197 58 713 A1, welche die Präambel des Anspruchs 1 offenbart, ist eine Stelleinrichtung eines in zwei Bewegungsarten bewegbaren Ausgangsteils bekannt.

Es ist daher Aufgabe der Erfindung, einen verkleinerten Aktuator zum Schalten eines mehrstufigen Getriebes anzugeben, der die im Getriebe eingelegten Gänge sicher halten kann.

### Offenbarung der Erfindung

Die Aufgabe wird durch den Schaltaktuator nach Anspruch 1 sowie durch die Schaltwelle und den Getriebestellaktuator gemäß den nebengeordneten Ansprüchen gelöst.

Weitere vorteilhafte Ausgestaltungen sind in den abhängigen Ansprüchen angegeben.

Gemäß einem ersten Aspekt der Erfindung umfasst ein Schaltaktuator zum Auslenken einer Schaltwelle eines Getriebes
- ein Radiallager mit einer Rotationsachse, um die der Schaltaktuator drehend lagerbar ist; und
- ein Schiebeelement zum Auslenken der Schaltwelle, wenn sich der Schaltaktuator um das Radiallager dreht,
- wobei eine Ausrichtung der Rotationsachse des Radiallagers zur Auslenkungsrichtung verschieden, insbesondere rechtwinklig, ist.

Dem erfindungsgemäßen Schaltaktuator liegt der Gedanke zugrunde, dass bei einem durch einen Linearantrieb betätigten herkömmlichen Schaltaktuator alle Kräfte, also die Stellkräfte und die Störkräfte auf einer Achse liegen. Schüttelbelastungen des Getriebes, wirken in axialer Richtung auf die Schaltwelle genauso wie die vom Linearantrieb übertragenen Stellkräfte. Auf diese Weise kann der herkömmliche durch einen Linearantrieb betätigte Schaltaktuator die Störkräfte nicht hemmen, da er sonst gleichzeitig die gewünschten Stellkräfte ebenfalls hemmen würde. Beim erfindungsgemäßen Schaltaktuator wird daher vorgeschlagen die den Angriffspunkt der Stellkräfte aus der Wirkrichtung der Störkräfte zu entfernen. Dies wird dadurch erreicht, dass die Stellkräfte den Schaltaktuator drehen und dieser die Stellkräfte in die herkömmliche lineare Stellkraft umwandelt, um die Schaltwelle zu bewegen. Der erfindungsgemäße Schaltaktuator hat den Vorteil dass er im Gegensatz zu einer Schaltwalze mit der Schaltwelle alle notwendigen Zahnräder eines Getriebes bewegen kann, um die einzelnen Übersetzungsverhältnisse einzustellen, anders als beim Linearantrieb wird der Antrieb des Schaltaktuators jedoch nicht in Bewegungsrichtung angesetzt sondern rechtwinklig dazu. Dadurch werden weniger aus einem Getriebe resultierende, zur Schaltwelle axiale Kräfte auf den Antrieb übertragen, die die Lage des Schaltaktuators verstellen können. Schüttelbelastungen des Schaltaktuators werden so besser gehemmt.

Das Schiebeelement kann spiralförmig um die Rotationsachse gelegt sein. So lässt sich mit dem Schaltaktuator ein kontinuierlicher Stellbereich für eine Schaltwelle realisieren, in der jede beliebige Stellposition angefahren werden kann. Darüber hinaus sind der Kraft- und damit der Energieaufwand zum Positionieren der Schaltwelle klein.

Das spiralförmige Schiebeelement kann eine Nut zur Aufnahme eines Stiftes aus der Schaltwelle aufweisen. Durch die Nut kann der Schaltaktuator die Schaltwelle, nicht nur schieben, sondern auch ziehen, da die Nut den Stift unabhängig von der Drehrichtung des Schaltaktuators greifen kann.

Das spiralförmige Schiebeelement kann mit maximal 360° um die Rotationsachse gelegt sein. Auf diese Weise kann einer bestimmten Winkelstellung des Schaltaktuators eindeutig eine Getriebestufe zugeordnet werden, wodurch eine aktuell eingelegte Getriebestufe auf einfache Weise durch Ermittlung der Absolutposition des Schaltaktuators ermittelt werden kann.

Das spiralförmige Schiebeelement kann Abschnitte aufweisen, in der die Steigung des spiralförmigen Schiebeelementes von der Rotationsachse aus gesehen Null ist. Diese Abschnitte ohne Steigung können eine axiale Kraftübertragung von einer Schaltwelle auf den Schaltaktuator weiter reduzieren und so Schüttelbelastungen des Schaltaktuators durch die Schaltwelle besser hemmen.

Der Schaltaktuator kann ein Zahnrad aufweisen, auf dessen Grundfläche und/oder oder Deckfläche das Schiebelement angeordnet sein kann. Über das Zahnrad lässt sich der Schaltaktuator auf einfache Weise antreiben.

Der Schaltaktuator kann ferner einen Positionsgeber aufweisen, aus dem die Position des Schaltaktuators auslesbar ist. Dieser Positionsgeber kann aktiv oder passiv ausgestaltet sein. In einer besonderen Ausbildung ist der Positionsgeber eine einfache Bohrung, wobei die Position selbst beispielsweise mit Licht erfasst werden kann.

Gemäß einem zweiten Aspekt der Erfindung umfasst eine Schaltwelle zum Schieben eines auf die Schaltwelle aufsetzbaren Getriebezahnrades:
- eine Rotationsachse, um die wenigstens ein Teil der Schaltwelle drehbar gelagert ist; und
- einen von der Rotationsachse abragenden Mitnehmer, zum Anlegen an das Schiebeelement eines angegebenen Schaltaktuators.

Der Mitnehmer kann einen Stift aufweisen, die zum Eingreifen in eine Nut eines angegebenen Schaltelements vorgesehen ist. Auf diese Weise lässt sich die Schaltwelle schieben und ziehen.

Gemäß einem zweiten Aspekt der Erfindung umfasst ein Getriebestellaktuator:
- eine axial verstellbare angegebene Schaltwelle; und
- einen angegeben Schaltaktuator,
- wobei der Mitnehmer der Schaltwelle an das Schiebelement des Schaltaktuators angelegt ist.

### Kurzbeschreibung der Zeichnungen

Bevorzugte Ausführungsformen der vorliegenden Erfindung werden nachfolgend anhand der beigefügten Zeichnungen näher erläutert. Es zeigen:
Figur 1 einen Schaltaktuator gemäß einem ersten Ausführungsbeispiel der Erfindung;
Figur 2 einen Getriebestellaktuator mit dem Schaltaktuator aus Figur 1;
Figur 3 einen Schaltaktuator gemäß einem ersten Ausführungsbeispiel der Erfindung; und
Figur 4 einen Getriebestellaktuator mit dem Schaltaktuator aus Figur 3.

### Beschreibung von Ausführungsformen

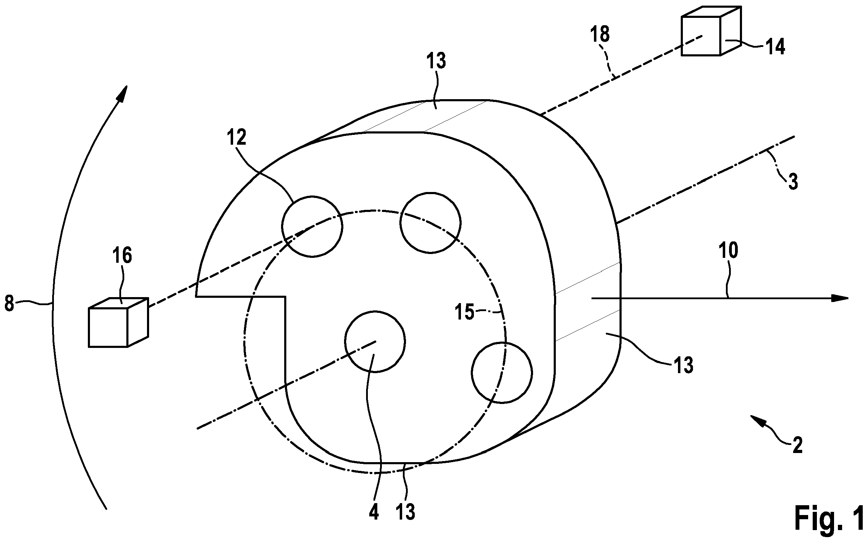

In Figur 1 ist ein Schaltaktuator 2 gemäß einem ersten Ausführungsbeispiel der Erfindung gezeigt.

Der Schaltaktuator 2 kann drehbar um eine Rotationsachse 3 gelegt werden. Die Rotationsachse 3 verläuft in der vorliegenden Ausführung durch ein Radiallager 4, das beispielhaft als Bohrung ausgeführt ist, und durch das eine nicht gezeigte Lagerwelle geführt werden kann. Diese Lagerwelle kann durch einen nicht gezeigten Hilfsmotor angetrieben werden, um den Schaltaktuator zu drehen. Alternativ kann die Lagerwelle einstückig mit dem Schaltaktuator 2 ausgebildet sein.

Der Schaltaktuator 2 weist einen Umfang 6 auf, der spiralförmig um das Radiallager 4 gelegt ist. Wird der Schaltaktuator 2 durch den Hilfsmotor um das Radiallager 4 in eine Richtung 8 gedreht, so kann der Schaltaktuator 2 eine vom Radiallager 4 weggerichtete Normalkraft 10 aufbringen, um ein Teil, wie beispielsweise eine noch zu beschreibende Schaltwelle eines nicht gezeigten Getriebes, von der Rotationsachse 3 wegzuschieben. Der spiralförmige Umfang 6 dient daher als Schiebeelement.

Um die Aufnahme von den Normalkräften 10 entgegen gerichteten Kräften aus dem zu schiebenden Teil zu ermöglichen, ohne dass der Schaltaktuator 2 durch das zu schiebende Teil gedreht wird, kann er an seinem spiralförmigen Umfang 6 an bestimmten Postionen Abschnitte 13 ohne Steigung aufweisen. Diese Abschnitte 13 verlaufen damit tangential zur Rotationsachse 3 und damit senkrecht zur Normalkraft 10, so dass in diesen Abschnitten 13 keine axialen Verstell-Kräfte und Verstell-Drehmomente resultierend aus Schüttelbelastung der Schaltwelle auf den Schaltaktuator 2 übertragen werden können. Schüttelbelastungen des Schaltaktuators 2 können so wirksamer gemindert werden, da die geraden Abschnitte 13 aus dem bewegten Teil resultierende Axialkräfte wirksamer hemmen.

Zur Ermittlung der Position des an den spiralförmigen Umfang 6 anliegenden bewegten Teils kann der Schaltaktuator 2 Positionsbohrungen 12 aufweisen, die in einem Kreis 15 um das Radiallager 4 gelegt sein können. In Figur 1 ist nur eine Positionsbohrung 12 mit einem Bezugszeichen versehen, das jedoch stellvertretend für alle Positionsbohrungen 12 auf dem Kreis 15 gilt. Wird statorseitig, beispielsweise an einem nicht gezeigten Gehäuse des Getriebes mit dem Schaltaktuator 2 ein Signalgeber 14, wie beispielsweise eine Leuchtdiode und ein Signalempfänger 16, wie beispielsweise eine Photodiode, auf einer Höhe des Kreises 15 angeordnet, und wird der Schaltaktuator 2 zwischen dem Signalgeber 14 und dem Signalempfänger 16 angebracht, so kann die Position des Schaltaktuators 2 erfasst werden, wenn eine der Positionsbohrungen 12 den Signalgeber 14 passieren und der Signalempfänger 16 ein Signal 18 aus dem Signalgeber 14 empfängt.

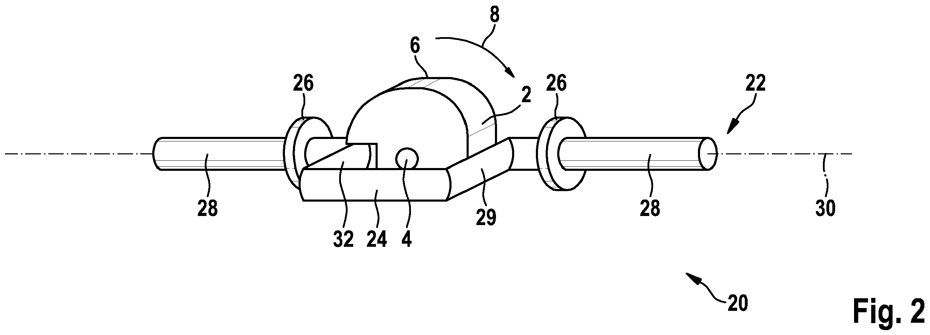

Figur 2 zeigt einen Getriebestellaktuator 20 mit dem Schaltaktuator 2 aus Figur 1. In Figur 2 werden zu Figur 1 gleiche Elemente mit gleichen Bezugszeichen versehen und nicht noch einmal beschrieben. Neben dem Schaltaktuator 2 weist der Getriebestellaktuator die bereits erwähnte Schaltwelle 22 auf.

Die Schaltwelle 20 besteht aus einem Mitnehmer 24, zwei Kupplungen 26 und zwei Zahnradträgern 28, auf der die nicht gezeigten Zahnräder des Getriebes aufgesetzt sind.

Die Schaltwelle 22 weist eine Rotationsachse 30 auf, um die die durch die Schaltwelle 22 zu tragenden nicht gezeigte Getriebezahnräder gedreht werden. Die Getriebezahnräder können auf den Zahnradträgern 28 drehbar oder drehfest angeordnet sein. Sind sie drehbar angeordnet, so kann auf die Kupplungen 26 verzichtet werden. In jedem Fall sollten sich die Getriebezahnräder auf den Zahnradträgern 28 axial nicht verschieben lassen.

Die Kupplungen 26 ermöglichen den Zahnradträgern 28 sich gegenüber dem Mitnehmer 24 zu drehen. Der Mitnehmer 24 ragt von der Rotationsachse 30 ab und ist zur Rotationsachse hin U-förmig geöffnet. In seiner Öffnung 32 kann er das Schaltaktuator 2 aufnehmen. Wird das Schaltelement 2 in Rotationsrichtung 8 gedreht, so vergrößert sich der Radius des spiralförmigen Umfangs 6 und drückt gegen eine erste Innenseite 29 des Mitnehmers 24. Auf diese Weise wird die Schaltwelle 22 entlang der Rotationsachse 30 in der Bildebene nach rechts bewegt.

Eine Rückstellung der Schaltwelle 22 erfolgt automatisch durch Weiterdrehen des Schaltaktuators 2, wenn sich der nun auf der, der ersten Innenseite 29 gegenüberliegenden zweiten Innenseite 34 des Mitnehmers 24 verjüngte Radius des spiralförmigen Umfangs 6 wieder beginnt zu vergrößern und damit gegen die zweite Innenseite 34 drückt. Alternativ oder zusätzlich kann ein nicht gezeigtes Rückstellelement, wie eine Feder, den Mitnehmer 24 fest gegen den spiralförmigen Umfang 6 drücken, um ein Rückstellen der Schaltwelle 22 unabhängig von der Drehrichtung zu ermöglichen.

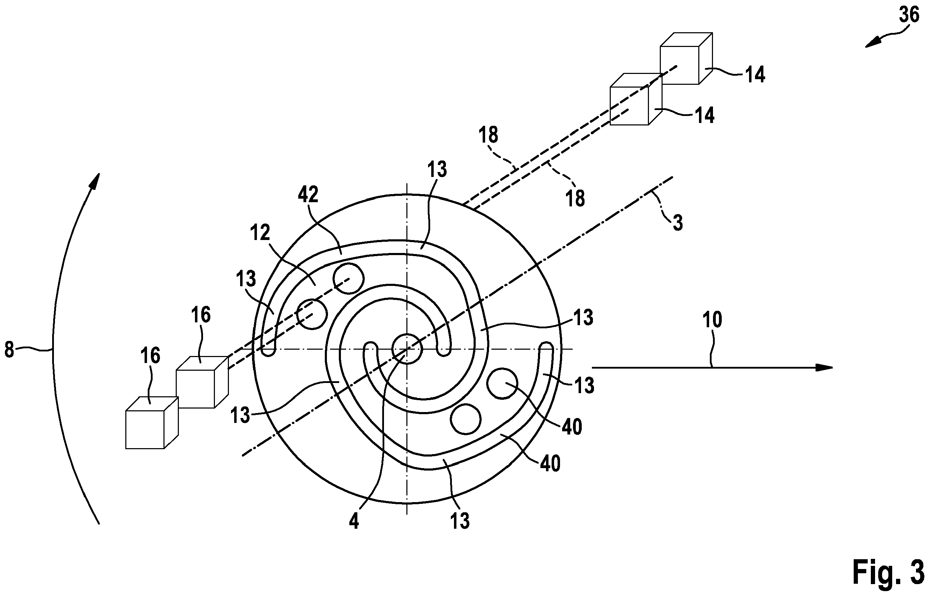

Figur 3 zeigt einen Schaltaktuator 36 gemäß einem zweiten Ausführungsbeispiel der Erfindung. In Figur 3 werden zu Figur 1 und 2 gleiche Elemente mit gleichen Bezugszeichen versehen und nicht noch einmal beschrieben.

Der Schaltaktuator 36 ist scheibenförmig aufgebaut. Der spiralförmige Umfang 6 ist nun durch eine erste Nut 40 und eine zweite Nut 42 auf der Deckseite 38 der Scheibe ersetzt. In die Nuten 40, 42 kann in einer noch zu beschreibenden Weise das zu bewegende Teil des Getriebes eingreifen. Der Vorteil der Nuten 40, 42 ist, dass sie das zu bewegende Teil des Getriebes nicht nur schieben, sondern auch ziehen können.

In Figur 3 sind der Signalgeber 14 und der Signalempfänger 16 zweiteilig aufgebaut, so dass die Positionsbestimmung über zwei verschiedene Positionssignale 18 ablaufen kann. Erstrecken sich die spiralförmigen Nuten 40, 42 um weniger als 360°, um die Rotationsachse 3, so kann mit einer derartigen Anordnung die Absolutposition des Schaltaktuators 36 erfasst werden. Dieses Prinzip ist auf den Schaltaktuator aus Figur 1 übertragbar.

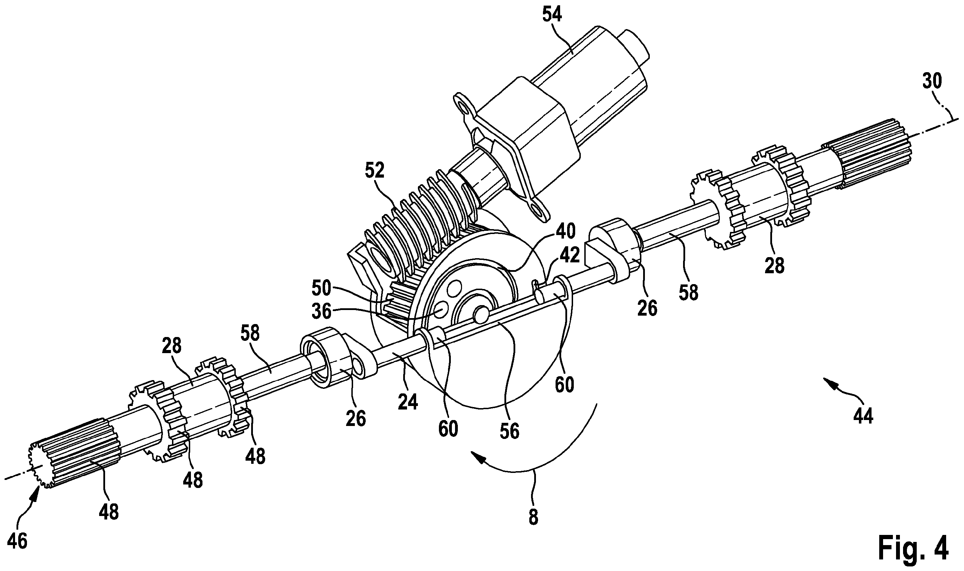

Figur 4 zeigt einen Getriebestellaktuator 44 mit dem Schaltaktuator 36 aus Figur 3. In Figur 4 werden zu den Figuren 1 bis 3 gleiche Elemente mit gleichen Bezugszeichen versehen und nicht noch einmal beschrieben. Neben dem Schaltaktuator 36 weist der Getriebestellaktuator eine Schaltwelle 46 auf.

Auf der Schaltwelle 46 sind in die Bildebene hinein gesehen links und rechts jeweils drei Zahnräder 48 angebracht, die durch ein Schieben und ziehen der Schaltwelle 46 mit Antriebsrädern auf nicht gezeigten Getriebewellen in Eingriff gebracht werden können, um ein bestimmtes Übersetzungsverhältnis herzustellen. In Figur 4 sind der Übersichtlichkeit halber nur die linken drei Zahnräder 48 auf der Schaltwelle 46 mit einem Bezugszeichen versehen.

Der Schaltaktuator 36 weist an seinem Umfang Zähne 50 auf und bildet so ein Zahnrad, in das eine Schnecke 52 eines Hilfsantriebs 54 eingreift. Diese Ausführung ist besonders vorteilhaft, da keine Kraftübertragung vom Schaltaktuator 36 zurück auf die Schnecke 52 möglich ist. Dadurch wird die in Figur 1 bereits beschriebene Wirkung der geraden Abschnitte 13 der Nuten 40, 42 weiter gesteigert und eine Drehung des Schaltaktuators 36 bei Kräften aus der Schaltwelle 46 entlang der Rotationsachse 30 wirksamer vermieden.

In der vorliegenden Ausführungsform weist der Mitnehmer 24 eine Teleskopstange 56 auf, auf der sich Arme 58 mit den Kupplungen 26 und den Zahnradträgern 28 auseinanderbewegen können. An den äußersten Enden 60 sind in die Nuten 40, 42 hinein gerichtete Führungsdorne ausgebildet, die in der Perspektive der Figur 4 nicht zu sehen sind. Wird der Schaltaktuator 4 in die Richtung 8 gedreht, so bewegen sich die Arme 58 auseinander. Wird der Schaltaktuator 4 entgegen der Richtung 8 gedreht, so bewegen sich die wieder Arme 58 zusammen.

Der erfindungsgemäße Schaltaktuator kann mit einer einzigen Schaltwelle alle notwendigen Zahnräder bewegen, um im Getriebe die verschiedenen Übersetzungen einzustellen.

## Patentansprüche

1. Schaltaktuator mit einer auslenkbaren Schaltwelle (46) eines Getriebes, umfassend:
- ein Radiallager (4) mit einer Rotationsachse (3), um die der Schaltaktuator (36) drehend lagerbar ist; und
- ein Schiebeelement (40, 42), das die Schaltwelle (22, 46) auslenkt, wenn sich der Schaltaktuator (36) um das Radiallager (4) dreht,
- wobei eine Ausrichtung der Rotationsachse (3) des Radiallagers (4) zur
Auslenkungsrichtung verschieden, insbesondere rechtwinklig, ist,
**dadurch gekennzeichnet, dass**
das Schiebeelement (40, 42) spiralförmig um die Rotationsachse (3) verläuft, wobei das spiralförmige Schiebeelement (40, 42) eine Nut (40, 42) zur Aufnahme eines Stiftes aus der Schaltwelle (46) ist.

2. Schaltaktuator nach Anspruch 1, wobei das spiralförmige Schiebeelement (6, 40, 42) mit maximal 360° um die Rotationsachse (3) gelegt ist.

3. Schaltaktuator nach einem der Ansprüche 1 oder 2, wobei das spiralförmige Schiebeelement (6, 40, 42) Abschnitte (13) aufweist, in der die Steigung des spiralförmigen Schiebeelementes (6, 40, 42) von der Rotationsachse (3) aus gesehen Null ist.

4. Schaltaktuator nach einem der vorstehenden Ansprüche umfassend ein Zahnrad (50), auf dessen Grundfläche und/oder oder Deckfläche (38) das Schiebelement (6, 40, 42) angeordnet ist.

5. Schaltaktuator nach einem der vorstehenden Ansprüche umfassend einen Positionsgeber (12).

6. Getriebestellaktuator umfassend:
- Einen Schaltaktuator nach einem der Ansprüche 1 bis 5, - die axial verstellbare Schaltwelle (46) zum Schieben eines auf die Schaltwelle (46) aufsetzbaren Getriebezahnrades (48); und
- eine zweite Rotationsachse (30) um die wenigstens ein Teil der Schaltwelle gelagert ist und ein von dieser zweiten Rotationsachse (30) abragender Mitnehmer (24), zum Anlegen an das Schiebeelement (40, 42) eines Schaltaktuators (36), wobei der Mitnehmer (24) einen Stift aufweist, der zum Eingreifen in die Nut (40, 42) des Schaltaktuators (36) vorgesehen ist,
wobei der Mitnehmer (24) der Schaltwelle (46) an das Schiebelement (40, 42) des Schaltaktuators (2, 36) angelegt ist.

## Claims

1. Shifting actuator having a deflectable shift shaft (46) of a transmission, comprising:
- a radial bearing (4) with a rotational axis (3), about which the shifting actuator (36) can be mounted rotationally; and
- a sliding element (40, 42) which deflects the shift shaft (22, 46) when the shifting actuator (36) rotates about the radial bearing (4),
- an orientation of the rotational axis (3) of the radial bearing (4) being different, in particular at a right angle, with respect to the deflection direction,
**characterized in that**
the sliding element (40, 42) runs helically about the rotational axis (3), the helical sliding element (40, 42) being a groove (40, 42) for receiving a pin from the shift shaft (46).

2. Shifting actuator according to Claim 1, the helical sliding element (6, 40, 42) being laid around the rotational axis (3) by at most 360°.

3. Shifting actuator according to either of Claims 1 and 2, the helical sliding element (6, 40, 42) having sections (13), in which the pitch of the helical sliding element (6, 40, 42) is zero as viewed from the rotational axis (3).

4. Shifting actuator according to one of the preceding claims, comprising a gearwheel (50), on the bottom face and/or the top face (38) of which the sliding element (6, 40, 42) is arranged.

5. Shifting actuator according to one of the preceding claims, comprising a position encoder (12).

6. Transmission actuator comprising:
- a shifting actuator according to one of Claims 1 to 5,
- the axially adjustable shift shaft (46) for sliding a transmission gearwheel (48) which can be placed onto the shift shaft (46); and
- a second rotational axis (30), about which at least one part of the shift shaft is mounted, and a driver (24) which protrudes from the said second rotational axis (30), for applying to the sliding element (40, 42) of a shifting actuator (36),
the driver (24) having a pin which is provided for engaging into the groove (40, 42) of the shifting actuator (36),
the driver (24) of the shift shaft (46) being applied to the sliding element (40, 42) of the shifting actuator (2, 36).

## Revendications

1. Actionneur de changement de rapport présentant un arbre déplaçable (46) de changement de rapport d'une transmission, comprenant :
- un palier radial (4) doté d'un axe de rotation (3) autour duquel l'actionneur (36) de changement de rapport est monté à rotation et
- un élément coulissant (40, 42) qui déplace l'arbre (22, 46) de changement de rapport lorsque l'actionneur (36) de changement de rapport tourne autour du palier radial (4),
- une direction de l'axe de rotation (3) du palier radial (4) étant différente de la direction de déplacement et en particulier perpendiculaire à cette dernière,
**caractérisé en ce que**
l'élément coulissant (40, 42) s'étend en spirale autour de l'axe de rotation (3) et
**en ce que** l'élément coulissant (40, 42) en spirale est une rainure (40, 42) qui reprend une tige qui déborde de l'arbre (46) de changement de rapport.

2. Actionneur de changement de rapport selon la revendication 1, dans lequel l'élément coulissant (6, 40, 42) en forme de spirale s'étend sur au plus 360° autour de l'axe de rotation (3).

3. Actionneur de changement de rapport selon l'une des revendications 1 ou 2, dans lequel l'élément coulissant (6, 40, 42) en forme de spirale présente des sections (13) dans lesquelles la pente de l'élément coulissant (6, 40, 42) en forme de spirale vue depuis l'axe de rotation (3) est nulle.

4. Actionneur de changement de rapport selon l'une des revendications précédentes, comprenant une roue dentée (50) sur la surface de base et/ou la surface de recouvrement (38) de laquelle est disposé l'élément coulissant (6, 40, 42).

5. Actionneur de changement de rapport selon l'une des revendications précédentes, comprenant une sonde de position (12).

6. Actionneur de transmission comprenant
- un actionneur de changement de rapport selon l'une des revendications 1 à 5,
- l'arbre (46) de changement de rapport déplaçable axialement destiné à coulisser sur une roue dentée (48) de transmission apte à être placée sur l'arbre (46) de changement de rapport, et
- un deuxième axe de rotation (30) autour duquel au moins une partie de l'arbre de changement de rapport est montée et un entraînement (24) qui déborde de ce deuxième axe de rotation (30) pour venir se placer sur l'élément coulissant (40, 42) d'un actionneur (36) de changement de rapport,
l'entraîneur (24) présentant une tige prévue pour s'engager dans la rainure (40, 42) de l'actionneur (36) de changement de rapport,
l'entraîneur (24) de l'arbre (46) de changement de rapport étant placé sur l'élément coulissant (40, 42) de l'actionneur (2, 36) de changement de rapport.
